# EUROPEAN PATENT APPLICATION

(11) **EP 2 050 527 A1**
(43) Date of publication of application: **22.04.2009**
(21) Application number: 07301471.4
(22) Date of filing: 16.10.2007
(51) Int. Cl.: B22F 3/11

(54) **Method of producing open-cell inorganic foam**

(71) Applicant: Azzi, Lhoucine, 30000 Nîmes (FR)
(72) Inventor: Azzi, Lhoucine, 30000 Nîmes (FR)
(74) Representative: Rhein, Alain

(57) **Abstract**

The present invention provides a method of producing low-density open-cell inorganic foam. The method comprises the steps of providing a dry powder mixture containing at least inorganic particles, soluble space-filler particles, and solid organic binder, shaping said dry powder composition into a preform by pouring it in a mold having a given form, heating said preform to melt the organic binder, solidifying said organic binder to obtain a solid perform, removing at least the space-filler from the solid preform by dissolution in an appropriate solvent, heating and maintaining the material at a temperature sufficient to burn-out the remaining organic binder, and finally sintering the remaining inorganic material to obtain an open-cell inorganic foam.
The inorganic particles are metal, metal alloy or ceramic particles or mixtures thereof.

## Description

### FIELD OF THE INVENTION

The present invention relates to porous materials and to a method for producing open cell inorganic materials.

Inorganic cellular materials, also known as inorganic foams, have found applications as; ultra-lightweight structural materials, vibration dampers, energy absorbers, electrodes, catalyst support, gas storage systems, fluid filters, wick systems and biomaterials. Inorganic foams can be produced with non-connected closed cells or interconnected open cells. Closed cell inorganic foams are very stiff, high strength, low weight and have high impact energy absorbing characteristics. These features make closed cell inorganic foams effective in structural applications. Open cell inorganic foams have usually lower strength than closed cell inorganic foams but possess higher surface to volume ratio and are, as a result, effective in applications requiring high surface exchange, high heat dissipation and high permeability characteristics.

Several processing routes exist to produce inorganic foams. Good reviews of the manufacturing routes to produce inorganic foams can be found in "Cellular Solids: Structure and Properties", Pergamon Press, New York, 1986 by L.J. Gibson and M.F. Ashby and in "Manufacture, characterization and application of cellular metals and metal foams ", Progress in Materials Science, 2001, 46, p.559-632, by J.Banhart.

Closed cell metallic foams can be produced from metal melts or metal powder compacts. Metal melts can be foamed by bubbling gas or by stirring a gas releasing agent such as TiH₂ in the liquid. US Pat. #4,973,358, for example, teaches a method for producing foamed metal in which gaseous bubbles are retained within a mass of molten metal during foaming. As another example, US Pat. #3,087,807 teaches a method for producing metal or alloy foams by thoroughly mixing a metal or alloy powder with a powdered gas-forming material. This mixture is then extruded preferably after being cold compacted. The resulting extruded material is then heated in a control manner to produce a foam.

Pressure or investment casting of preforms can produce open cell inorganic foams. US Pat. #3,616841, for example, teaches a method for producing an insoluble foam material having a predetermined reticulated structure formed of ligaments, comprising: providing as a pattern a self supporting reticulated polyurethane foam formed of ligaments; preparing an investment of said treated foam pattern by fitting the voids of said pattern with an aqueous suspension of plaster of Paris and allowing suspension to set; creating voids in said investment by volatilizing the polyurethane foam; introducing molten substances selected from metals, metal alloys, ceramic and cermets, into said investment, solidifying said molten material and thereafter washing away said investment substance. Peng and Fan in "Immiscible systems produced by squeeze casting of engineered metallic foams", Journal of Materials Science Letters, 2001, 20, n°4, p.1769-1771, describe a method to produce open cell aluminum foams by first infiltrating a sodium chloride preform and then dissolving the salt in water to leave behind the aluminum foam. Banhart in "Properties and applications of cast aluminum sponges", Advanced Engineering Materials, 2000, 2, n°4, p.188-191, describes a process to make open cell aluminum sponges by using organic or inorganic granules as space-holding fillers and casting the liquid metal into the remaining voids of the filler, after which the filler is removed.

Coating of open cell organic templates with metals and ceramics can also produce inorganic open cell foams. In these techniques, the coated structures are subjected to a thermal treatment to remove the polymer template, followed by a high temperature sintering to consolidate the remaining inorganic foam. US Pat. #3,090,094 teaches a method for producing cellular ceramic articles by immersing an open-celled element of spongy material in a slurry containing a ceramic coating material to coat cell-defining walls of said element, removing excess slurry from said element, and firing said element to remove the spongy material and form a hardened structure of porous ceramic. US Pat. #4,076,88 provides a method for producing openwork structure of metal utilizing low temperature arc vapor deposition on a foam which is destroyed by pyrolysis. US Pat. #4,978431 provides a method to produce open cell metallic foams by dissolving a metallic anode and depositing this metal on a polymer template cathode.

Loose powder sintering, as described by Lemel in "Powder metallurgy principles and applications", Metal Powder Industries Federation, London, 1980, is also a process to manufacture open cell inorganic foams. This technique consists in pouring a powder in a mold and heating it to a temperature where sintering occurs. Sintering of hollow spheres instead of powders can produce both closed and open cell foams. The volume fraction of porosity in these foams is limited to around 50 vol.% and the pore size and shape is controlled by the size and shape of the powder.

Foaming of slurries is another route to produce open cell foams. This process consists in dispersing an inorganic powder and a foaming agent in an organic vehicle. The slurry is foamed, dried and then sintered to form an open porous structure. A variant of this approach has been proposed in US Pat. #6,660,224 where instead of starting from a slurry, a dry powder mixture containing an inorganic powder, a foaming agent and a solid binder is heated to melt the binder while inducing foaming in the mixture. The mixture is then solidified and the binder is removed by thermal treatment. The remaining inorganic material is sintered to obtain a solid low-density open-cell foam.

In the space holding filler technique, a filler material, which serves as pore- former, is mixed with a metal powder. Mixing is optionally carried out with a solvent or a binder to coat the powder onto the surface of the filler material. The mixture is either cold or hot pressed to form a green body. The filler is removed, by thermal treatment or leaching, and the remaining open cell inorganic foam is sintered. Patent application WO 2005/118186 A2 teaches a method to produce porous metallic material comprising the step of mixing metallic particles with a carbonate additive and a binder and compressing the mixture beyond the yield strength of the metallic particles, heating the mixture to a first temperature sufficient to evaporate the binder, heating and maintaining the temperature of the mixture to a second temperature sufficient to sinter the metallic particles but insufficient to decompose or melt the carbonate additive, removing the carbonate additive from the sintered porous metallic material and optionally heating and maintaining the temperature of the sintered porous metallic material to a third temperature greater than the second temperature so as to enhance the sintering. Wen et al in "Processing and mechanical properties of autogenous titanium implant material", Journal of Material Science, 2002, 13, p.397-401, describe a method to make open-cell titanium foams by mixing powders with ammonium hydrogen carbonate particles, uniaxially pressing this powder mixture and heat treating the compacted body to burn-out the spacer particles and sinter the porous titanium foam. Jiang et al in "Processing of open cell aluminum foams with tailored porous morphology", Scripta Materiala, 2005, 53, p.781-785, describe a method to make open-cell aluminum foams by mixing aluminum powders with carbamide particles, compacting the mixture to produce a green compact, removing the carbamide particles in hot water at 80°C and finally sintering the open cell aluminum foam in vacuum. Foams with porosities between 50% and 80% were obtained. There were residual carbamide, after dissolution, in the green compacts with porosities between 50% and 60% and green compacts collapsed when porosity were above 80%.

Compared to the other techniques, the space holding filler technique is a simple, cost effective and efficient process to produce low-density open cell inorganic foams with tailored porosities. However this technique requires the compaction of the powder-filler mixture to prevent the collapse of the foam upon removal of the space filler particles. This is particularly necessary when the filler is removed at low temperature where the green strength of the powder-filler material cannot be ensured by a metallurgical bond between the powder particles. Removal of the space-filler particles at low temperature can be necessary to avoid contamination of the inorganic particles by the space-filler particles at high temperature and ensure a good sintering of the inorganic particles. Furthermore, compaction can deform the pore-forming particles, especially organic pore-formers, and as a result alter the shape and the size of the pores and the mechanical properties of the foam. Another issue with compaction is die wear resulting from the friction between the powder and the die walls. Parts with large surface of friction and/or containing abrasive fillers or powders can be difficult to press. Another issue with the space holding filler technique, where the filler particles are removed at low temperature by dissolution, is to ensure the complete removal of the space filler particles. Complete removal of the space filler particles depends on the number of contact between the filler particles. At low volume fraction of pores (typically below 65 vol.%) and/or for high filler to powder particle size ratio, isolated filler particles can remain in the foam and alter its properties.

There remains therefore a need to develop a cost effective process to make highly porous and interconnected open-cell inorganic foams, of any size and shape, with tailored porosities and good sintered properties. This invention seeks to provide such a process.

### SUMMARY OF THE INVENTION

It is an object of the present invention to provide a method of producing open-cell inorganic foam.

More particularly, the present invention provides a method of producing an open and highly interconnected porous material with the ability to control pore size, shape and homogeneity.

Typically, foams produced by processes of the invention have porosity between 50 and 97 vol.%.

In a preferred embodiment, the method of the invention comprises the steps of:
a) Providing a dry powder mixture containing, at least, 5 to 90 wt.% of inorganic particles, 40 to 90 wt.% of soluble space-filler particles, 0.025 to 20 wt% of soluble organic particles and 1 to 20 wt.% of solid organic binder;
b) Shaping said powder composition into a preform by pouring it in a mold having a given form;
c) Heating said preform to melt the organic binder at a temperature lower than the melting point of the space-filler particles but higher than this of the soluble organic particles;
d) Solidifying said organic binder to obtain a solid preform;
e) Removing the space-filler and soluble organic particles from the solid preform by dissolution in an appropriate solvent;
f) Heating and maintaining the material at a temperature sufficient to burn-out the remaining organic binder;
g) And finally sintering the remaining inorganic material to obtain an open-cell inorganic foam.

In a particular embodiment, the method of the invention comprises the steps of:
a) Providing a dry powder mixture containing, at least, 5 to 90 wt.% of inorganic particles, 40 to 90 wt.% of soluble space-filler particles and 1 to 20 wt.% of solid organic binder;
b) Shaping said dry powder composition into a preform by pouring it in a mold having a given form;
c) Heating said preform to melt the organic binder at a temperature lower than the melting point of the space-filler particles;
d) Solidifying said organic binder to obtain a solid preform;
e) Removing the space-filler particles from the solid preform by dissolution in an appropriate solvent;
f) Heating and maintaining the material at a temperature sufficient to burn-out the remaining organic binder;
g) And finally sintering the remaining inorganic material to obtain an open-cell inorganic foam.

In this embodiment, the solidified solid preform has to be sufficiently porous to make the dissolution of the space-filler particles possible.

Moreover, the viscosity of the binder can be adjusted during the heating of the preform to melt the organic binder at a temperature lower than the melting point of the space-filler particles, in order to control the density of the solid preform.

In both proposed embodiments, the invention provides methods of producing an open and highly interconnected porous material of any given shape and size with the ability to control pore size, shape and homogeneity. Processes of the invention allow the complete removal of the space-filler particles, from green powder-filler preforms, at low temperature without having to press the powder to prevent the collapse of the material upon removal of the space-holder.

Inorganic particles can be metal, metal ally or ceramic particles or combination thereof.

Organic binder can be a thermoplastic or thermoset or combination thereof.

Moreover, the dry powder mixture can be heated in air or in an inert atmosphere, for a time varying from 2 minutes to 3 hours.

The organic binder can be solidified by cooling of the powder composition at a temperature lower than the melting point of said organic binder, or by the help of a cross-linking agent.

This cross-linking agent can be added in a powder form, in the melted state or in solution in a solvent.

More particularly following the invention, the organic binder is fired between 200°^{°} C and 750°^{°} C, preferably between 300°^{°} C and 600°^{°} C.

Soluble space-filler particles are preferably organic or inorganic particles, or combination thereof, and have melting points higher than 100°^{°} C, preferably higher than 300°^{°} C.

It is possible to classify soluble space-filler particles according to their shape and size in order to control the shape and the size of the pores of the final foam.

In the preferred embodiment, the soluble organic particles are soluble polymers or waxes, or combination thereof, with melting points between 50°^{°} C and 250°^{°} C, preferably between 60°^{°} C and 150°^{°} C.

In this case, soluble organic particles can be admixed to the dry powder composition in the solid state, in the liquid state or in solution in a solvent.

In some embodiments of the invention, the solid preform resulting of solidification step is machined prior to the removing of the space-filler and soluble organic particles from the solid preform by dissolution in an appropriate solvent.

The soluble organic particles and the space-filler particles can be extracted, from the green perform, in the same solvent or sequentially in different solvents.

The space filler and soluble organic particles can be removed by dissolution in the same solvent or removed sequentially in two different solvents.

Moreover, heating and maintaining the material at a temperature sufficient to burn-out the remaining organic binder the treatment can be carried out in air, but can also be carried out in an inert atmosphere.

In all embodiments, the dry powder composition can further comprise an additional binder to improve segregation and flow.

This additional binder can be admixed to the dry powder composition in a solid state, in a melted state or by spray coating techniques, and can be removed during the dissolution step or during the firing step.

In the preferred embodiment, the dry powder mixture is heated to melt the organic binder at a temperature that is lower than the melting point of the space-filler particles but higher than this of the soluble organic particles. During that step, the organic binder forms a 3 D network around the powder-filler. After solidification of this network, the solid preform has enough green strength to allow the dissolution at low temperature (<100°^{°} C) of the space-filler particles without compromising its dimensional integrity. The space-filler particles remain solid, ensuring a good control of the shape and the size of the main pores of the foam. On the other hand, the contacts between the space-filler particles and the melted soluble particles ensure a high interconnectivity between the space-filler particles. This allows a complete and easy removal of the space filler particles during the dissolution process even at low volume fraction of porosity. After the dissolution step, the material is a solid open-cell composite foam, containing inorganic particles and organic binder, with a highly open structure that allows an easy gas escape during the firing step. After the firing step, the porous material is sintered to obtain a rigid open-cell inorganic foam.

### BRIEF DESCRIPTION OF THE DRAWINGS

The invention will now be described in more detail, by way of examples, with reference to the accompanying drawings, in which:
- Figure 1 shows the microstructure of a titanium foam preform after dissolution of NaCl space filler particles and soluble Poly Ethylene Oxide (PEO) resin;
- Figure 2 shows the microstructure of a titanium foam after sintering at 1000°C in a purified argon atmosphere;
- Figure 3 shows the microstructure of a nickel foam after sintering at 1000°C in a hydrogene atmosphere;
- Figure 4 shows the microstructure of a copper foam after sintering at 800°C in a hydrogene atmosphere;

### DETAILED DESCRIPTION OF THE INVENTION

In a preferred embodiment, the present invention provides a method of producing low-density open-cell inorganic foam comprising the steps of providing a dry powder mixture containing 5 to 90 wt.% of inorganic particles, 40 to 90 wt.% of soluble space-filler particles, 0.025 to 20 wt% of soluble organic particles and 1 to 20 wt.% of solid organic binder.

The dry powder mixture is poured in a mold having any given form and heated to melt the organic binder at a temperature lower than the melting point of the space-filler particles but higher than this of the soluble organic particles. After heating, the powder mixture is made into a solid preform by solidifying the binder. Prior to heating, the dry powder mixture can be packed in the mold in order to maximize the amount of said powder mixture that can be contained in the mold.

In accordance with the present invention, the inorganic particles comprise any metal, metal alloy or ceramic particles. Preferably, the particle size of the inorganic particles is between 0.5 and 600 microns.

Organic binders include thermoplastics and thermosets. The organic binder can be admixed, in a powder form, with all the additives of the dry powder mixture or can be coated at the surface of the inorganic particles. The coating can be carried-out by wet-blending by first dissolving the binder in an appropriate solvent, adding the solution to the inorganic particles and then evaporating the solvent. The coating can also be carried-out by melt-blending by first admixing the binder powder to the inorganic particles, heating the mixture to melt the binder and then cooling the mixture. The organic binder is chosen as to provide enough green strength to the material during the dissolution step and as to burnout cleanly during the firing step to ensure good sintering of the inorganic particles during the sintering step. The concentration of the organic binder in the powder formulation may vary as a function of the volume fraction of porosity in the foam. Typically, between 1 and 20 wt.%, but preferably between 1.5 and 6 wt.%, of binder is added to the powder mixture.

Typically, the organic binder is melted in a temperature range from 60°^{°} C to 300°^{°} C for time varying from 2 minutes to 3 hours. This treatment may be carried-out in air or in inert atmospheres. The organic binder can be solidified by cooling under the melting point of said organic binder. The organic binder may also be solidified by the help of a cross-linking agent. The cross-linking agent may be added to the powder mixture in the solid state, in a powder form, in the melted state or in solution in a solvent.

Soluble space-filler particles include organic and inorganic space filler particles. The space-filler particles preferred for the practice of the present invention are the organic and inorganic soluble space filler particles with melting points, typically, higher than 100°^{°} C, but preferably higher than 300°^{°} C. The space-filler particles may be classified according to size and shape prior to admixing in order to control the size and the shape of the main pores of the foam.

Soluble organic particles include soluble polymers and waxes with melting points, typically, between 50° C and 300°^{°} C, but preferably between 60° and 150°^{°} C. Typically, the soluble organic particles can be admixed in the solid state, in the liquid state or in solution in a solvent. The concentration of the soluble organic particles in the powder formulation may depend on the powder formulation and may vary as a function of the volume fraction of porosity in the foam. Lower volume fraction of porosity requiring higher concentration of soluble organic particles to ensure a good interconnectivity between the space filler particles prior to the dissolution step. The concentration of soluble organic particles can be set intentionally high to increase the cell opening of the foam. Typically, between 0.025 and 20 wt.%, but preferably between 0.5 and 10 wt.%, of soluble organic particles is added to the powder mixture.

The soluble organic particles, coagulated in a resin, and the space-filler particles can be extracted at the same time if they are soluble in the same solvent, or sequentially if they must be dissolved in different solvents. In the latter case, it is preferred to extract the soluble organic particles first to allow a good interconnection between the space-filler particles prior to their dissolution. Preferably, the soluble organic resin and the space-filler are removed, by leaching between 25° and 100° C^{°}.

In some embodiments, an additional organic binder may be added to the powder mixture to prevent segregation and improve flow. The binder may be admixed in a solid or melted state. If the binder is soluble in standard solvents, it can be added by spray coating techniques. The binder can be removed during the dissolution or the firing step. The binder is added at a concentration typically from 0.05 to 2 wt.%, but preferably from 0.05 to 0.5 wt.% of the total weight of the powder mixture.

The temperature at which the organic binder is fired is, typically, between 200°^{°} C and 750°^{°} C, but preferably between 350° and 650°^{°} C. The firing temperature maybe reached at a given heating rate and maintained for a given time that depends on the chemical nature of the binder. Firing maybe carried-out in inert atmospheres or in air. In the case of metal foams, sintering in a reducing atmosphere should follow firing in air to reduce metal oxides.

After firing, the inorganic foam is sintered at high temperature to form a rigid open-cell inorganic foam. The sintering parameters are chosen as to control the final density and mechanical properties of the foam. It will be recognized by those skilled in the art that the sintering parameters such as; sintering time, temperature and atmosphere will depend, among other parameters, on the nature and the particle size of the inorganic particles.

Typically, foams produced by processes of the invention have porosity between 50 and 97 vol.%.

### PRACTICAL EXAMPLES

### EXAMPLE 1: TITANIUM FOAM

A powder composition containing 48 wt.% of titanium powder, 44 wt.% of water-soluble sodium chloride particles with particle size between 200 and 400µm, 4 wt.% of low density polyethylene (LDPE) thermoplastic powder, 4 wt.% of water-soluble polyethylene oxide (PEO) powder and 0.5 wt.% of reticulating agent powder (dicumyl peroxide) was prepared by conventional dry-mixing in a turbula mixer. The sodium chloride and PEO powders have, respectively, melting points of around 801° and 62°^{°} C. A titanium foam preform was obtained by pouring this powder composition into a mold, heating said composition at 175°^{°} C for 20 minutes in air to melt and crosslink the LDPE thermoplastic binder. After the preform was cooled at room temperature, the sodium chloride particles and the PEO resin were removed by aqueous leaching in warm water. The titanium-polyethyene composite foam was fired in a purified argon atmosphere at 420° C for 2 hours. The remaining titanium foam was then sintered at 1000°^{°} C for 1 hour in a purified argon atmosphere. A titanium foam with a density of 1.44g/cc (or a volume fraction of pores of 68 vol.%) was obtained.

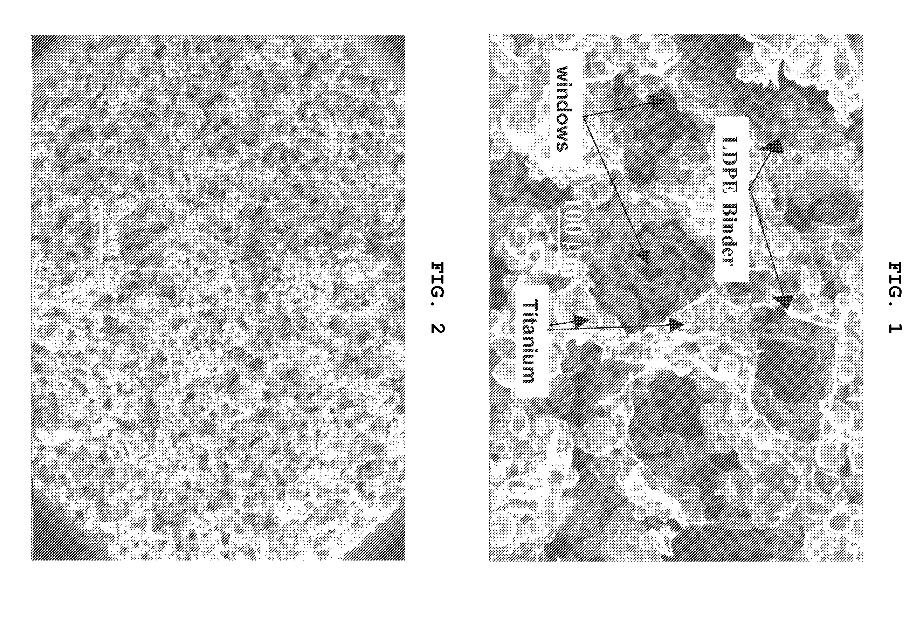

Figure 1 shows the microstructure of the titanium-polyethyene composite foam after the leaching step. Figure 1 clearly shows that the main pores left after leaching of the space filler are interconnected by widows. These windows were formed after leaching of the soluble PEO resin. Part of the widows may also come from the porosity present in the titanium foam preform after the shaping step. Figure 1 also shows that during the shaping step, the LDPE thermoplastic powder melted and formed an interconnected network between the titanium particles giving enough strength to the preform to allow the removal of the space filler particles at room temperature.

Figure 2 shows the microstructure of the titanium foam after sintering at 1000°^{°} C for 1 hour in a purified argon atmosphere.

### EXAMPLE 2: NICKEL FOAM

A powder composition containing 11 wt.% of nickel powder, 81.5 wt.% of water-soluble sodium chloride particles with particle size between 800 and 1000µm, 5.5 wt.% of low density polyethylene (LDPE) thermoplastic powder, 2 wt.% of water-soluble polyethylene oxide (PEO) powder was prepared by conventional dry-mixing in a turbula mixer. The sodium chloride and PEO powders have, respectively, melting points of around 801° and 62° C. A nickel foam preform was obtained by pouring this powder composition into a mold. This perform was heated at 220° C for 60 minutes in air and then cooled at room temperature to solidify the binder and obtain a solid preform. The sodium chloride particles and the PEO resin were then removed from the solid preform by aqueous leaching in warm water. The nickel-polyethyene composite foam was fired in air at 650° C for 2 hours. The remaining nickel foam was then sintered at 1000°^{°} C for 1 hour in a hydrogen atmosphere. A nickel foam with a density of 0.48 g/cc (or a volume fraction of pores of 95 vol.%) was obtained.

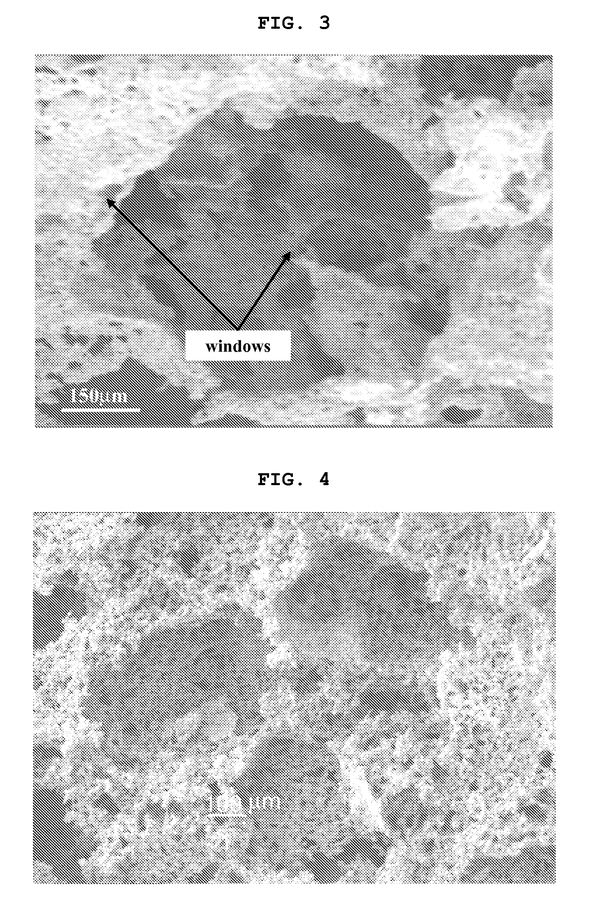

Figure 3 shows the microstructure of the nickel foam after sintering at 1000°^{°} C for 1 hour in a hydrogen atmosphere.

This example illustrates clearly the ability of the present invention to form green preform with porosities over 90 vol.%.

### EXAMPLE 3 : COPPER FOAM

A powder composition containing 36 wt.% of copper powder, 55 wt.% of water-soluble sodium chloride particles with particle size between 1200 and 1400µm, 6 wt.% of phenolic thermoset powder, 2.5 wt.% of water-soluble polyethylene glycol (PEG) powder was prepared by conventional dry-mixing in a turbula mixer. The sodium chloride and PEG powders have, respectively, melting points of around 801° and 57°^{°} C. A copper foam preform was obtained by pouring this powder composition into a mold, heating said composition at 200°^{°} C for 60 minutes in air and then cooling at room temperature. The sodium chloride particles and the PEG resin were removed by aqueous leaching in warm water. The copper-phenolic resin composite foam was fired in air at 650°^{°} C for 2 hours. The remaining nickel foam was then sintered at 800°^{°} C for 1 hour in a hydrogen atmosphere. A copper foam with a density of 1.3 g/cc (or a volume fraction of pores of 85 vol.%) was obtained.

Figure 4 shows the microstructure of the copper foam after sintering at 800°^{°} C for 1 hour in a hydrogen atmosphere.

## Claims

1. A method of producing open-cell inorganic foam, **characterized in that** it comprises the steps of:
a) Providing a dry powder mixture containing, at least, 5 to 90 wt.% of inorganic particles, 40 to 90 wt.% of soluble space-filler particles, 0.025 to 20 wt% of soluble organic particles and 1 to 20 wt.% of solid organic binder;
b) Shaping said dry powder composition into a preform by pouring it in a mold having a given form;
c) Heating said preform to melt the organic binder at a temperature lower than the melting point of the space-filler particles but higher than this of the soluble organic particles;
d) Solidifying said organic binder to obtain a solid preform;
e) Removing the space-filler and soluble organic particles from the solid preform by dissolution in an appropriate solvent;
f) Heating and maintaining the material at a temperature sufficient to burn-out the remaining organic binder;
g) And finally sintering the remaining inorganic material to obtain an open-cell inorganic foam.

2. A method according to claim 1, **characterized in that** the inorganic particles are metal, metal alloy or ceramic particles or combination thereof.

3. A method according to any one of the claims 1 or 2, **characterized in that** the organic binder is a thermoplastic or a thermoset or combination thereof.

4. A method according to any one or more of the claims 1 to 3, **characterized in that** the dry powder mixture is heated in air or in an inert atmosphere, for a time varying from 2 minutes to 3 hours, to melt said organic binder at a temperature higher than the melting point of the soluble organic particles but lower than this of the space-filler particles.

5. A method according to claim 4, **characterized in that** the organic binder is solidified by cooling the powder composition at a temperature lower than the melting point of said organic binder.

6. A method according to claim 4, **characterized in that** the organic binder is solidified by the help of a cross-linking agent.

7. A method according to claim 6, **characterized in that** the cross-linking agent is added in a powder form, in the melted state or in solution in a solvent.

8. A method according to any one or more of the claims 1 to 7, **characterized in that** the organic binder is fired between 200°^{°} C and 750°^{°} C, preferably between 300°^{°} C and 6000°^{°} C.

9. A method according to any one or more of the claims 1 to 8, **characterized in that** the soluble space-filler particles are organic or inorganic particles, or combination thereof.

10. A method according to claim 9, **characterized in that** the soluble space-filler particles have melting points higher than 100°^{°} C, preferably higher than 300°^{°} C.

11. A method according to any one of the claims 9 or 10, **characterized in that** the soluble space-filler particles are classified according to shape and size in order to control the shape and the size of the pores of the final foam.

12. A method according to any one or more of the claims 1 to 11, **characterized in that** the soluble organic particles are soluble polymers or waxes, or combination thereof.

13. A method according to the claim 12, **characterized in that** said soluble organic particles have melting points between 50°^{°} C and 250°^{°} C, preferably between 600°^{°} C and 150°^{°} C.

14. A method according to any one or more of the claims 1 to 13, **characterized in that** soluble organic particles are admixed to the dry powder composition in the solid state, in the liquid state or in solution in a solvent.

15. A method according to any one or more of the claims 1 to 14, **characterized in that** the solid preform resulting of solidification step is machined prior to the removing of the space-filler and soluble organic particles from the solid preform by dissolution in an appropriate solvent.

16. A method according to any one or more of the claims 1 to 15, **characterized in that** the soluble organic particles and the space-filler particles are extracted, from the green perform, in the same solvent.

17. A method according to any one or more of the claims 1 to 15, **characterized in that** the soluble organic particles and the space-filler particles are extracted, from the green perform, sequentially in different solvents.

18. A method according to any one or more of the claims 1 to 17, **characterized in that** the space filler and soluble organic particles are removed by dissolution in the same solvent.

19. A method according to any one or more of the claims 1 to 17, **characterized in that** the space filler and soluble organic particles are removed sequentially in two different solvents.

20. A method according to any one or more of the claims 1 to 19, **characterized in that** heating and maintaining the material at a temperature sufficient to burn-out the remaining organic binder the treatment is carried out in air.

21. A method according to any one or more of the claims 1 to 19, **characterized in that** heating and maintaining the material at a temperature sufficient to burn-out the remaining organic binder the treatment is carried out in an inert atmosphere.

22. A method of producing open-cell inorganic foam, **characterized in that** it comprises the steps of:
a) Providing a dry powder mixture containing, at least, 5 to 90 wt.% of inorganic particles, 40 to 90 wt.% of soluble space-filler particles and 1 to 20 wt.% of solid organic binder;
b) Shaping said dry powder composition into a preform by pouring it in a mold having a given form;
c) Heating said preform to melt the organic binder at a temperature lower than the melting point of the space-filler particles;
d) Solidifying said organic binder to obtain a solid preform;
e) Removing the space-filler particles from the solid preform by dissolution in an appropriate solvent;
f) Heating and maintaining the material at a temperature sufficient to burn-out the remaining organic binder;
g) And finally sintering the remaining inorganic material to obtain an open-cell inorganic foam.

23. A method according to claim 22, **characterized in that** the solid preform is porous so that the dissolution of the space-filler particles is possible.

24. A method according to any one of the claims 22 or 23, **characterized in that** the viscosity of the binder is adjusted during the heating of the preform to melt the organic binder at a temperature lower than the melting point of the space-filler particles, in order to control the density of the solid preform.

25. A method according to any one of the claims 1 to 24, **characterized in that** the dry powder composition further comprises an additional binder to improve segregation and flow.

26. A method according to claim 25, **characterized in that** the additional binder is admixed to the dry powder composition in a solid state, in a melted state or by spray coating techniques.

27. A method according to any one of the claims 25 or 26, **characterized in that** the additional binder is removed during the dissolution step.

28. A method according to any one of the claims 25 or 26, **characterized in that** the additional binder is removed during the firing step.
